# EUROPÄISCHE PATENTSCHRIFT

(11) **EP 3 416 401 B1**
(45) Veröffentlichungstag und Bekanntmachung des Hinweises auf die Patenterteilung: **16.03.2022**
(21) Anmeldenummer: 18176207.1
(22) Anmeldetag: 06.06.2018
(51) Int. Cl.: H04Q 9/02, H04W 4/38

(54) **MOBILES TRANSPORTMITTEL ZUM TRANSPORTIEREN VON DATENSAMMLERN, DATENSAMMELSYSTEM UND DATENSAMMELVERFAHREN**
MOBILE TRANSPORT DEVICE FOR TRANSPORTING DATA COLLECTORS, DATA COLLECTION SYSTEM AND DATA COLLECTION METHOD
MOYEN DE TRANSPORT MOBILE PERMETTANT DE TRANSPORTER DES COLLECTEURS DE DONNÉES, SYSTÈME DE COLLECTION DE DONNÉES ET PROCÉDÉ DE COLLECTION DE DONNÉES

(30) Priorität: 13.06.2017 DE 102017112931
(43) Veröffentlichungstag der Anmeldung: 19.12.2018
(73) Patentinhaber: Prüftechnik Dieter Busch GmbH, 85737 Ismaning (DE)
(72) Erfinder: Dinkelbach, Anna-Maria, 85604 Zorneding (DE)

(56) Entgegenhaltungen:
- US-A1- 2003 234 730
- US-A1- 2014 024 313
- US-A1- 2016 341 578

## Beschreibung

Auf dem Gebiet der Maschinenüberwachung ist das regelmäßige Sammeln oder Einholen von Daten, welche bestimmte Mess- oder Zustandsgrößen von zu überwachenden Maschinen betreffen, unumgänglich, um nach deren Analyse Auskünfte über bestimmte Betriebszustände der Maschine zu erhalten. Zu diesem Zweck müssen Datensammler an zumeist vorgegebenen Datensammelpositionen angeordnet werden, damit diese zum Sammeln der relevanten Daten in der Lage sind. Gegenstand der vorliegenden Erfindung ist daher der Transport von Datensammlern zu jeweiligen Datensammelpositionen. Insbesondere betrifft die Erfindung ein Datensammelsystem und ein Datensammelverfahren, bei welchen Datensammler an Datensammelpositionen abgesetzt werden und anschließend Daten sammeln.

Ein in der Landwirtschaft einsetzbares mobiles Transportmittel mit einer Empfangsvorrichtung zum Empfangen von Daten, welche ein Datensammler an das Transportmittel überträgt, ist in der US 2016/0341578 A1 offenbart.

Im Rahmen des sogenannten "Condition Monitoring" kann die Überwachung von Maschinen über fest installierte Systeme erfolgen, wie beispielsweise in der DE 20 2006 018 859 U1. Bei diesen ist eine entsprechende Sensorik zum Messen von Zustandsgrößen der Maschine sowie Aufzeichnungs- bzw. Auswertegeräte an oder nahe bei der Maschine fest installiert. Bei anderen wie beispielsweise dem aus der DE 20 2013 001 191 U1 bekannten System werden Sensoren, welche Zustandsgrößen der Maschine messen oder erfassen, lediglich zeitweilig oder temporär an oder nahe bei der Maschine angeordnet oder installiert. In beiden Fällen misst die Sensorik typische physikalische Messgrößen wie Schwingweg, Schwinggeschwindigkeit und Schwingbeschleunigung von bewegten und nicht bewegten Maschinenteilen, die dazu geeignet sind, Auskunft über Zustände der Maschine zu geben. Aber auch andere Messgrößen können hierfür geeignet sein, wie zum Beispiel die Temperatur, die visuelle Inspektion, die chemische oder physikalische

Beschaffenheit von Flüssigkeiten wie beispielsweise Getriebeölen usw. Bei den vom Datensammler gesammelten Daten kann es sich nun entweder um die von der Sensorik direkt gelieferten Messwerte handeln oder aber um Daten, die nach Aufbereitung dieser Messwerte erhalten werden oder sich aus diesen ableiten.

Fest installierte Systeme sind vorteilhaft in Bezug auf die kontinuierliche, jederzeitige Aufzeichnung des Maschinenzustands. Die Messungen laufen weitestgehend automatisch konfiguriert ab. Jedoch ist die Installation der Messmimik aufwändig und teuer. Ferner müssen für jede einzelne Maschine jeweilige Einrichtungen vorgesehen werden. Temporär installierte Systeme können hingegen für eine Vielzahl von Maschinen eingesetzt werden. Außer zur temporären Befestigung der Sensoren fallen keine Installationskosten an. Jedoch sind bei temporär installierten Systemen die Personalkosten höher, da dieses für die Messung zugegen sein muss.

In diesem Zusammenhang ist zu berücksichtigen, dass Maschinen teilweise sehr unzugänglich verbaut beziehungsweise Messstellen für die Sensoren schlecht erreichbar sind. So sind beispielsweise Ventilatoren in Kühltürmen oder auch auf Dächern installierte Aggregate schwer erreichbar. Dies führt zu einer weiteren Steigerung der Installationskosten bei fest installierten Systemen aber auch bei nur temporär installierten Systemen, da die Erreichbarkeit der relevanten Stellen für Messpersonal deutlich erschwert ist und unter Umstände sogar völlig verhindert sein kann. In manchen Fällen muss die Maschine sogar abgeschaltet werden, um diese Stellen erreichen zu können, um sie anschließend für die Messung wieder einzuschalten. Dies führt zu Stillstandzeiten und erhöhtem Zeitbedarf für die Messung, was wiederum die Kosten erhöht. Zudem ist in solchen Fällen die Gefährdung des Bedienpersonals erhöht.

Es ist daher die Aufgabe der vorliegenden Erfindung, Datensammler schnell und kostengünstig auch an schwierig erreichbaren Datensammelpositionen anzuordnen.

Diese Aufgabe wird durch das Datensammelsystem in einem optoelektronischen Ausrichtsystem mit den Merkmalen des Anspruchs 1 und durch das Datensammelverfahren mit den Merkmalen des Anspruchs 6 gelöst. Bevorzugte Ausführungsformen sind Gegenstand der abhängigen Ansprüche.

Gemäß der vorliegenden Erfindung wird für den Transport des Datensammlers an die Datensammelposition ein mobiles Transportmittel vorgesehen, das über wenigstens eine Absetzvorrichtung zum Absetzen des Datensammlers an der Datensammelposition und zum Wiederaufnehmen des Datensammlers nach Abschluss des Sammelns von Daten und wenigstens eine Empfangsvorrichtung zum Empfangen von Daten aufweist, welche der Datensammler an das Transportmittel überträgt. Bei diesem Transportmittel kann es sich insbesondere um eine sogenannte Drohne oder um einen Roboter handeln, wie sie im industriellen Umfeld beispielsweise zum Auffinden, Identifizieren, Erkennen und Verfolgen bewegter Objekte, zum Fotografieren, Filmen, der visuellen und akustischen Überwachung sowie zur Säuberung von oder für Montagetätigkeiten an Objekten im Einsatz sind. Bei der Absetzvorrichtung des Transportmittels, die zum Absetzen des Datensammlers an der Datensammelposition vorgesehen ist, kann es sich um eine gelenkige oder ausfahrbare Vorrichtung wie zum Beispiel einen Greifarm oder Roboterarm handeln. So kann die Absetzvorrichtung mehrgliedrig ausgeführt sein und zusätzlich oder alternativ einen oder mehrere teleskopartig auseinanderziehbare und zusammenschiebbare Abschnitte aufweisen. Ferner kann die Absetzvorrichtung zum Greifen oder Halten des Datensammlers auf beliebige Art und Weise eingerichtet sein. Zum Beispiel kann die Absetzvorrichtung den Datensammler auf mechanische Weise greifen und halten, beispielsweise mittels einer Greifzange, oder sie kann den Datensammler auf magnetische Weise, beispielsweise mittels eines Elektromagneten, halten oder durch Ansaugen, indem von einer Pumpvorrichtung des Transportmittels ein Unterdruck erzeugt wird.

Mittels eines erfindungsgemäßen Datensammelsystems, das wenigstens ein derartiges mobiles Transportmittel sowie wenigstens einen Datensammler aufweist, lässt sich eine autonom funktionierende Zustandsüberwachung von Maschinen realisieren. Entsprechend dem Datensammelverfahren der vorliegenden Erfindung wird der Datensammler hierfür vom Transportmittel zu jeweiligen vorgegebenen Datensammelpositionen transportiert und an diesen angeordnet. Viele Maschinen verfügen über Anlage- oder Anschlussstutzen, mit denen der Datensammler in Anlage gebracht werden kann oder mit denen der Datensammler verbindbar ist. Um den Datensammler mit solchen Anlage- oder Anschlussstutzen verbinden zu können, können verschiedene spezifische Verbindungs- oder Befestigungsarten zwischen Datensammler und Anlage- oder Anschlussstutzen vorgesehen sein wie zum Beispiel eine formschlüssige Verbindung zwischen Datensammler und Anlage- oder Anschlussstutzen, eine Rastverbindung oder eine Steckverbindung. Zudem können der Datensammler oder die jeweilige Datensammelposition bzw. der Anlage- oder Anschlussstutzen oder beide mit jeweiligen Permanentmagneten oder Elektromagneten vorgesehen sein, um den Datensammler in der Datensammelposition stabil zu halten.

Nach Absetzen an der Datensammelposition beginnt der Datensammler mit dem Sammeln von Daten. Hierfür führt der Datensammler selber Messungen automatisch durch und sammelt von ihm erfasste Messwerte als solche als Daten oder er sammelt auf deren Grundlage erzeugte Daten. Zu diesem Zweck ist der Datensammler mit wenigstens einem entsprechenden Datenerfassungsmittel wie zum Beispiel einem Sensor ausgerüstet, der jeweilige Messwerte oder Messdaten erfasst.

Im Anschluss an das Sammeln der Daten werden die gesammelten Daten vom Datensammler an das Transportmittel übertragen. Im Transportmittel können die Daten zwischengespeichert oder an ein externes Empfangsgerät weitergeleitet werden. Ebenso ist es möglich, die Daten bereits im Transportmittel zu verarbeiten oder auszuwerten und das Ergebnis dieser Verarbeitung oder Auswertung im Transportmittel zu speichern oder an ein externes Empfangsgerät weiterzuleiten. Vom Empfangsgerät können die weitergeleiteten Daten oder Verarbeitungs- bzw. Auswertungsergebnisse zur späteren Verwendung in einer Datenbank abgelegt werden oder an eine oder mehrere entsprechende Stellen zur Weiterverarbeitung übertragen werden. Schließlich nimmt das Transportmittel den Datensammler mit der Absetzvorrichtung wieder auf und entfernt sich von der Datensammelposition bzw. transportiert den Datensammler von der Datensammelposition fort.

Bevorzugt wird im Anschluss an das Übertragen der Daten der Datensammler von dem Transportmittel zu einer weiteren Datensammelposition transportiert und an dieser abgesetzt. Somit können sukzessive Daten an mehreren Datensammelpositionen von demselben Datensammler gesammelt werden.

Um vom Datensammler gesammelte Daten an das Transportmittel zu übertragen können ganz allgemein beliebige Datenübertragungsverbindungen zwischen dem Transportmittel und dem Datensammler vorgesehen sein. Zum Beispiel kann das Transportmittel zum Herstellen einer drahtlosen und/oder einer kabelgebundenen Datenübertragungsverbindung mit dem Datensammler eingerichtet sein. Zum Herstellen der drahtlosen Datenübertragungsverbindung kann das Transportmittel beispielsweise wenigstens eine serielle oder wenigstens eine analoge oder wenigstens eine IrDA-Schnittstelle (Infrared Data Association) oder wenigstens eine Bluetooth-Schnittstelle oder wenigstens eine WLAN-Schnittstelle (Wireless Local Area Network) oder wenigstens eine NFC-Schnittstelle (Near Field Communication) aufweisen oder jede andere drahtlose Datenübertragungsschnittstelle. Sofern das Transportmittel zum Herstellen einer kabelgebundenen Datenübertragungsverbindung mit dem Datensammler eingerichtet ist, kann es ebenfalls über wenigstens eine serielle oder wenigstens eine analoge Schnittstelle oder über wenigstens eine USB-Schnittstelle (Universal Serial Bus) oder wenigstens eine UART-Schnittstelle (Universal Asynchronous Receiver Transmitter) verfügen oder jede andere leitungsgebundene analoge oder digitale Schnittstelle. Darüber hinaus können das Transportmittel und der Datensammler über Schnittstellen zu beliebigen lokalen oder globalen Netzwerken wie dem Internet aufweisen, um die Daten über das jeweilige Netzwerk vom Datensammler an das Transportmittel oder vom Transportmittel zu einem externen Empfangsgerät zu übertragen.

Bevorzugt weist das Transportmittel wenigstens eine Kabelrolle zum Aufrollen eines Kabels der kabelgebundenen Datenübertragungsverbindung auf. Die Kabelrolle kann grundsätzlich beliebig ausgebildet sein. Mittels der Kabelrolle und dem von der Kabelrolle zum Datensammler verlaufenden Kabel kann eine schwingungsgedämpfte Verbindung zwischen Transportmittel und Datensammler während des Sammelns der Daten sowie während deren Übertragung vom Datensammler zum Transportmittel aufrechterhalten werden. Zudem wird hiermit eine Absturzsicherung für den Datensammler für den Fall erreicht, dass er sich aus irgendwelchen unvorhergesehenen Gründen wie zum Beispiel starken Erschütterungen von der Datensammelposition oder dem Anlage- oder Anschlussstutzen lösen sollte. Auch andere Formen der Kabelführung sind denkbar.

Das Transportmittel kann autonom beweglich oder fernsteuerbar sein und es kann ferner zum fliegenden und/oder fahrenden und/oder schwimmenden Fortbewegen ausgebildet sein. Autonom bewegliche Transportmittel folgen entweder einem festen Weg entsprechend einem vorgegebenen Programm oder es wird ihnen ein Ziel vorgegebenen, beispielsweise der Ort einer Datensammelposition oder eines Anlage- oder Anschlussstutzens für den Datensammler, wobei sich das Transportmittel den Weg zu seinem Ziel selber sucht. In beiden Fällen ist für das Transportieren und Absetzen des Datensammlers an der Datensammelposition durch das Transportmittel keinerlei personelle Unterstützung notwendig. Ferngesteuerte Transportmittel können von einer externen Steuervorrichtung oder einem externen Steuercomputer oder von einer Person über eine Fernsteuerung manuell ferngesteuert werden. Kleine mobile flugfähige Transportmittel werden gemeinhin als Drohnen und autonom mobile Transportmittel, die sich fahrend oder schwimmend fortbewegen, werden als Roboter bezeichnet, wobei der Begriff Roboter auch als Oberbegriff für eine autonom mobile Drohne bzw. eine autonom mobile Drohne als flugfähiger Roboter angesehen werden kann.

Während des Transportes durch das Transportmittel kann der Datensammler von der Absetzvorrichtung gehalten werden. Vorzugsweise ist das Transportmittel jedoch mit einer Aufnahmeeinrichtung zum Aufnehmen wenigstens eines Datensammlers während des Transports vorgesehen. Damit ist es nicht nur möglich, mehr als einen Datensammler gleichzeitig mit dem Transportmittel zu transportieren, die Aufnahmeeinrichtung kann hierdurch zudem während des Transports eine Stellung einnehmen, beispielsweise eine eingeklappte oder eingefahrene Stellung, in welcher sie die Fortbewegung des Transportmittels nicht behindert oder erleichtert.

Bevorzugt weist das Transportmittel wenigstens eine Kamera auf. Insbesondere autonom bewegliche Transportmittel können mit einer Kamera versehen sein, um dem Transportmittel eine Orientierung zu ermöglichen. Ferner kann die Kamera zur Aufzeichnung der Bewegung des Transportmittels zu Dokumentationszwecken eingerichtet sein.

Ebenfalls bevorzugt weist das Transportmittel wenigstens eine Steuereinheit auf. Die Steuereinheit kann zum Steuern des Datensammlers oder einer autonomen Bewegung oder eines sonstigen Betriebes des Transportmittels eingerichtet sein. Es können aber auch mehrere Steuereinheiten vorgesehen sein, die für verschiedene Funktionen eingerichtet sein, beispielsweise eine erste Steuereinheit zum Steuern des Datensammlers und eine zweite Steuereinheit zum Steuern einer autonomen Bewegung des Transportmittels und jeweilige weitere Steuereinheiten zum Steuern sonstiger Betriebe des Transportmittels. Bei der Steuereinheit kann es sich insbesondere um einen Mikroprozessor handeln bzw. sie kann einen solchen aufweisen. Ein solcher Mikroprozessor kann vorteilhaft zur Verarbeitung der vom Datensammler an das Transportmittel übertragenen Daten eingesetzt werden.

Vorteilhafterweise ist das Transportmittel mit wenigstens einem Datenspeicher vorgesehen. In diesem Datenspeicher lassen sich die vom Datensammler an das Transportmittel übertragenen Daten sowie durch Verarbeitung dieser Daten erhaltene Ergebnisse speichern oder zwischenspeichern. Bevorzugt handelt es sich bei dem Datenspeicher um einen Massenspeicher, um auch größere Datenmengen mit dem Transportmittel oder dem Datensammelsystem bewältigen zu können.

Des Weiteren weist das Transportmittel vorteilhaft wenigstens eine Kommunikationsschnittstelle auf. Über diese Kommunikationsschnittstelle kann das Transportmittel die vom Datensammler an das Transportmittel übertragenen Daten unmittelbar nach Erhalt an eine externe Empfängerstelle oder Empfängervorrichtung weiterleiten. Die Weiterleitung kann aber auch nach Wiederaufnehmen des Datensammlers durch das Absetzmittel und während des Entfernens des Transportmittels von der Datensammelposition oder erst nach Rücckehr des Transportmittels zum Ausgangsort seiner Bewegung erfolgen.

Das Transportmittel kann ferner eine Einrichtung zur Nahfeldkommunikation aufweisen. Über diese Einrichtung kann das Transportmittel beispielsweise mit dem abgesetzten Datensammler kommunizieren, um dessen Betrieb oder die Übertragung gesammelter Daten an das Transportmittel zu steuern. Die Einrichtung zur Nahfeldkommunikation kann es dem Transportmittel zudem ermöglichen, vorgegebene Datensammelpositionen wie zum Beispiel Anlage- oder Anschlussstutzen im Nahfeld zu erkennen.

Des Weiteren kann das Transportmittel wenigstens ein Sender-Empfänger-System zum automatischen und berührungslosen Identifizieren und Lokalisieren von Objekten mit Radiowellen aufweisen. Auch ein solches System kann das Erkennen vorgegebener oder geeigneter Datensammelpositionen ermöglichen. Hierbei kann es sich insbesondere um ein RFID-System (Radio-Frequency Identification) handeln.

Ebenso kann das Transportmittel zur optischen Bilderkennung eingerichtet sein. Auch hiermit wird das Transportmittel in die Lage versetzt, vorgegebene oder geeignete Datensammelpositionen zu erkennen.

Entsprechend können bei einer bevorzugten Ausführung des Datensammelverfahrens Datensammelpositionen mittels einer Nahfeldkommunikation oder mittels eines Sender-Empfänger-Systems zum automatischen und berührungslosen Identifizieren und Lokalisieren von Objekten mit Radiowellen oder mittels einer optischen Bilderkennung vom Transportmittel identifiziert werden. So kann ein autonom bewegliches Transportmittel eine vorgegebene Datensammelposition zunächst anhand vorgegebener Koordinaten ansteuern um diese dann, sobald sich das Transportmittel in der Nähe der Datensammelposition befindet, anhand einer oder mehrerer der genannten Einrichtungen endgültig zu erkennen.

Bei einer bevorzugten Ausführungsform des Datensammelsystems sind die Einrichtung zur Nahfeldkommunikation oder das Sender-Empfänger-System zum automatischen und berührungslosen Identifizieren und Lokalisieren von Objekten mit Radiowellen oder die optische Bilderkennung im Datensammler und nicht im Transportmittel angeordnet. In anderen Ausführungsformen weisen sowohl das Transportmittel als auch der Datensammler derartige Systeme auf. Im erfindungsgemäßen Datensammelsystem können diese Systeme in der Absetzvorrichtung des Transportmittels, beispielsweise neben einer Greifzange desselben, angeordnet sein.

Bei der vorliegenden Erfindung ist der Datensammler als Teil eines Ausrichtsystems zum fluchtenden Ausrichten von Drehachsen zweier drehbar gelagerter Körper ausgebildet. Hierbei wird neben dem Datensammler wenigstens ein weiteres Systemelement des Ausrichtsystems vom Transportmittel transportiert und an einer jeweiligen vorgegebenen Position abgesetzt. Bei dem Ausrichtsystem handelt es sich um ein optoelektronisches System mit einer Lichtemissionsvorrichtung zum Emittieren eines Lichtstrahls und einer Lichterfassungsvorrichtung, die eine lichtsensitive Fläche aufweist, wobei eine Auftreffposition eines von der Lichtemissionsvorrichtung emittierten Lichtstrahls auf der lichtsensitiven Fläche registrierbar ist. Dementsprechend ist der Datensammler als Lichterfassungsvorrichtung des optoelektronischen Ausrichtsystems ausgebildet, während das Transportmittel zum Transportieren der Lichtemissionsvorrichtung eingerichtet ist.

Die Erfindung wird nachfolgend anhand bevorzugter Ausführungsformen und unter Zuhilfenahme von Zeichnungen näher erläutert. Dabei zeigen:
- Figur 1: Transportmittel und Datensammler mit kabelgebundener Datenübertragungsverbindung;
- Figur 2: Transportmittel und Datensammler mit drahtloser Datenübertragungsverbindung.

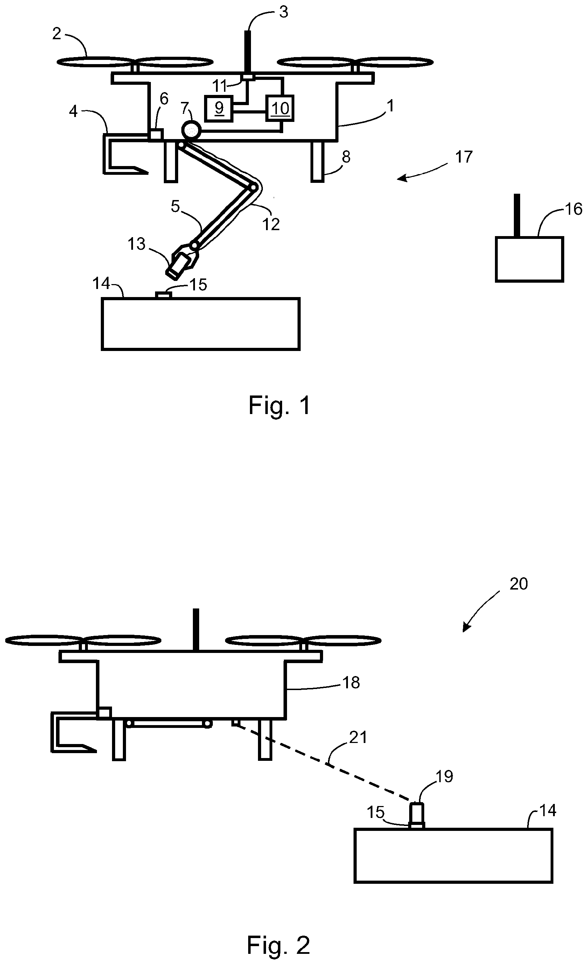

In der Figur 1 ist ein mobiles Transportmittel in Form einer Drohne 1 in stark schematischer Darstellung zu sehen. Obwohl die Drohne 1 Propeller 2 aufweist und infolgedessen flugfähig ist sei angemerkt, dass in anderen Ausführungsformen ohne Beschränkung der Allgemeinheit anstelle der flugfähigen Drohne 1 beispielsweise ein fahrbarer oder schwimmfähiger Roboter eingesetzt werden könnte. Die Drohne 1 weist neben den Propellern 2 eine Antenne 3, eine Aufnahmeeinrichtung oder Magazin 4, eine Absetzvorrichtung in Form eines ausund einfahrbaren gelenkigen Greifarmes 5, der in der Figur 1 in einem ausgefahrenen Zustand gezeigt ist, eine Kamera 6, eine Kabelrolle 7 sowie Standbeine 8 auf. Mit den Standbeinen 8 sitzt die Drohne 1 im gelandeten Zustand auf einem unterstützenden Untergrund auf. Ferner sind in der Drohne 1 eine Drohnensteuerung 9 und eine Steuereinheit 10 vorgesehen, die beide jeweils mit einer mit der Antenne 3 verbundenen Funkeinheit 11 als auch untereinander miteinander verbunden sind. Die Steuereinheit 10 ist zudem mit einem auf der Kabelrolle 7 aufgewickelten Kabel 12 verbunden, von dem in der Figur 1 ein Ende zu einem vom Greifarm 5 gehaltenen Datensammler 13 führt, der als Lichterfassungsvorrichtung eines optoelektronischen Ausrichtsystems ausgebildet ist. Alternativ kann für die Aufgaben von sowohl der Drohnensteuerung 9 als auch der Steuereinheit 10 eine einzige Steuereinheit vorgesehen sein, welche diese beiden ersetzt.

Mittels des Datensammlers 13 sollen an einem hierfür an einer Maschine 14 vorgesehenen Anschlussstutzen 15 Daten gesammelt werden. Zu diesem Zweck weist der Datensammler 13 einen in der Figur 1 nicht gezeigten Sensor auf, um nach Anordnen oder Positionieren des Datensammlers 13 am Anschlussstutzen 15 entsprechende Messwerte als Daten zu generieren. Der Datensammler 13 muss zunächst zum Anschlussstutzen 15 transportiert und anschließend an diesem angeordnet oder positioniert werden.

Für die Aufgabe des Transportierens des Datensammlers 13 zum Anschlussstutzen 15 und des Anordnens desselben am Anschlussstutzen 15 ist nun die Drohne 1 vorgesehen. Diese kann im vorliegenden Fall über eine Sende- und Empfangseinrichtung 16 teilweise funk- oder ferngesteuert werden. Insbesondere kann der Drohne 1 ein Startbefehl von der Sende- und Empfangseinrichtung 16 übermittelt werden. Bei anderen Ausführungsformen ist die Drohne 1 autonom beweglich und die Steuerung der Drohne 1 wird vollständig von deren Drohnensteuerung 9 übernommen, ohne dass diese hierfür externe Steuerbefehle erhalten müsste. Bei der Sende- und Empfangseinrichtung 16 kann es sich insbesondere um ein Handmessgerät zur Zustandsüberwachung handeln, den Datenspeicher eines Computers, eine Internetcloud oder ganz allgemein eine irgendwo befindliche Datenbank.

Zur Vorbereitung des Transports des Datensammlers 13 zum Anschlussstutzen 15 wird der Datensammler 13 im Magazin 4 der Drohne 1 angeordnet. Neben dem Datensammler 13 kann das Magazin 4 mit weiteren Datensammlern oder anderen Geräten bestückt sein, die von der Drohne 1 an jeweilige andere Positionen oder Orte zu transportieren sind. Ferner werden Koordinaten, die den Standort der Maschine 14 bezeichnen, in die Drohnensteuerung 9 und Koordinationsdaten für den Datensammler 13, die für dessen Betrieb benötigt werden, in die Steuereinheit 10 geladen. Im Gegensatz zur Figur 1 nimmt der Greifarm 5 einen eingefahrenen Zustand ein. Nach Abschluss dieser vorbereitenden Maßnahmen erfolgt der Start der Drohne. Der entsprechende Befehl hierzu wird der Drohne 1 über Handsteuerung oder automatisch durch die Sende- und Empfangseinrichtung 16 erteilt, wobei die Drohne 1 diesen Befehl über die Antenne 3 empfängt.

Die Drohne 1 wird nun von der Drohnensteuerung 9 zu dem Ort gesteuert, den die Koordinaten der Maschine 14 bezeichnen. Mittels durch die Antenne 3 empfangener und über die Funkeinheit 11 zur Drohnensteuerung 9 gelangender Steuerbefehle kann die Drohnensteuerung 9 bei dieser Aufgabe unterstützt werden. Außerdem wird die Drohnensteuerung 9 durch die Kamera 6 unterstützt, mit der eventuelle Hindernisse in Bewegungsrichtung der Drohne 1 wahrgenommen werden, sodass die Drohne 1 von der Drohnensteuerung 9 zur Umgehung dieser Hindernisse entsprechend gelenkt werden kann.

Nach Erreichen des durch die Koordinaten der Maschine 14 bezeichneten Ortes identifiziert die Drohnensteuerung 9, die über eine optische Bilderkennung verfügt, den Anschlussstutzen 15 mittels der Kamera 6 sowie der Koordinaten und bewegt die Drohne 1 in dessen Nähe. Sofern der Datensammler 13 noch nicht mit dem Kabel 12 verbunden ist, wird die Verbindung zwischen Kabel 12 und Datensammler 13 von dem von der Drohnensteuerung 9 gesteuerten Greifarm 5 hergestellt. Sodann ergreift der Greifarm 5 den Datensammler 13, entnimmt diesen aus dem Magazin 4 und setzt ihn auf die vorgesehene Weise auf dem Anschlussstutzen 15 ab. Von der Kabelrolle 7 wird dabei nach Freigeben oder Loslassen des Datensammlers 13 durch den Greifarm 5 soviel Kabel 12 entlassen, dass der Datensammler 13 von der Drohne 1 schwingungsentkoppelt und dennoch mit ihr verbunden ist.

Nunmehr meldet die Drohnensteuerung 9 der Steuereinheit 10, dass der Datensammler 10 auf dem Anschlussstutzen 15 sitzt. Die Steuereinheit 10 identifiziert den Anschlussstutzen 15 mittels NFC, RFID oder auf optische Weise und startet den Betrieb des Datensammlers 13. Auf der Grundlage der Koordinationsdaten wird der Betrieb des Datensammlers 13 von der Steuereinheit 10 gesteuert.

Vom auf dem Anschlussstutzen 15 abgesetzten oder positionierten Datensammler 13 werden nun Daten auf die oben beschriebene Weise gesammelt, d.h. sie werden vom Datensammler 13 selbst erzeugt. Gesammelte Daten werden über das Kabel 12, über welches eine kabelgebundene Datenübertragungsverbindung zur Steuereinheit 10 besteht, zur Steuereinheit 10 übertragen und von dieser empfangen. Die Steuereinheit 10 speichert diese Daten, wertet sie aus und speichert auch die Auswerteergebnisse. Falls erwünscht, kann die Steuereinheit 10 die Daten und Auswerteergebnisse über die Funkeinheit 11 und die Antenne 3 an die Sende- und Empfangseinrichtung 16 übertragen.

Stellt die Steuereinheit 10 fest, dass der Datensammler 13 das Sammeln der Daten ordnungsgemäß abgeschlossen hat, teilt sie dies der Drohnensteuerung 9 mit. Diese veranlasst den Greifarm 5 daraufhin, den Datensammler 13 wieder aufzunehmen und im Magazin 4 zu verstauen. Nach Einfahren des Greifarmes 5 entfernt sich die Drohne 1 von der Maschine 14, um den Datensammler 13 oder einen anderen im Magazin 4 befindlichen Datensammler gegebenenfalls an einer anderen Datensammelposition oder einen anderen Anschlussstutzen derselben Maschine 14 oder einer anderen Maschine abzusetzen.

Nachdem Daten von allen dafür vorgesehenen Datensammelpositionen oder Anschlussstutzen eingesammelt worden sind, fliegt die Drohne 1 zu einem vorgegebenen Landeplatz und landet dort. Sofern nicht bereits geschehen, können die in der Drohne gespeicherten Daten sowie die Auswerteergebnisse nun über die Funkeinheit 11 und die Antenne 3 oder über eine übliche drahtgeführte Schnittstelle zu einem vorgesehenen Empfänger wie zum Beispiel der Sendeund Empfangseinrichtung 16 übertragen werden.

Die im Zusammenhang mit der Figur 1 beschriebene Drohne 1 und der Datensammler 13 sind dabei aufeinander abgestimmt und bilden gemeinsam ein die Drohne 1 und den Datensammler 13 aufweisendes Datensammelsystem 17.

Ein weiteres eine Drohne 18 und einen Datensammler 19 aufweisendes Datensammelsystem 20 ist in der Figur 2 dargestellt. Das Datensammelsystem 20 ist in der Figur 2 während des Sammelns von Daten durch den Datensammler 19 zu sehen, wobei der Datensammler 19 wie der zuvor beschriebene Datensammler 13 zum Sammeln der Daten auf dem Anschlussstutzen 15 der Maschine 14 positioniert ist. Im Unterschied zur Figur 1 ist der Datensammler 19 des Datensammelsystems 20 nicht über eine kabelgebundene Datenübertragungsverbindung mit der Drohne 18 verbunden sondern vielmehr über eine drahtlose Datenübertragungsverbindung 21. Abgesehen von diesem Unterschied entspricht die Funktionsweise des Datensammelsystems 20 demjenigen des zuvor beschriebenen Datensammelsystems 17.

### Bezuqszeichenliste

- 1.: Drohne
- 2.: Propeller
- 3.: Antenne
- 4.: Magazin
- 5.: Greifarm
- 6.: Kamera
- 7.: Kabelrolle
- 8.: Standbein
- 9.: Drohnensteuerung
- 10.: Steuereinheit
- 11.: Funkeinheit
- 12.: Kabel
- 13.: Datensammler
- 14.: Maschine
- 15.: Anschlussstutzen
- 16.: Sende- und Empfangseinrichtung
- 17.: Datensammelsystem
- 18.: Drohne
- 19.: Datensammler
- 20.: Datensammelsystem
- 21.: drahtlose Datenübertragungsverbindung

## Patentansprüche

1. Datensammelsystem (17, 20) in einem optoelektronischen Ausrichtsystem zum fluchtenden Ausrichten von Drehachsen zweier drehbar gelagerter Körper mit wenigstens einem mobilen Transportmittel (1, 18) zum Transportieren wenigstens eines Datensammlers (13, 19) an wenigstens eine Datensammelposition (15) und wenigstens einem Datensammler (13, 19) mit Mitteln zum automatischen Durchführen von Messungen und Sammeln von als Daten erfassten Messwerten an der Datensammelposition, bei dem das Transportmittel (1, 18)
wenigstens eine Empfangsvorrichtung (10) zum Empfangen von Daten, welche der Datensammler (13, 19) an das Transportmittel (1, 18) überträgt, und
wenigstens eine Absetzvorrichtung (5) zum Absetzen des Datensammlers (13, 19) an der Datensammelposition (15) und zum Wiederaufnehmen des Datensammlers (13, 19) nach Abschluss des Sammelns von Daten aufweist,
**dadurch gekennzeichnet, dass**
das Transportmittel (1, 18) weiter dazu eingerichtet ist, neben dem Datensammler (13, 19) wenigstens eine Lichtemissionsvorrichtung des Ausrichtsystems zum Emittieren eines Lichtstrahls zu transportieren und an einer jeweiligen vorgegebenen Position abzusetzen und
der Datensammler (13, 19) im optoelektronischen Ausrichtsystem mit einem Datenerfassungsmittel ,
wie zum Beispiel einem Sensor ausgerüstet ist, das als Lichterfassungsvorrichtung ausgebildet ist, die eine lichtsensitive Fläche aufweist, wobei eine Auftreffposition eines von der Lichtemissionsvorrichtung emittierten Lichtstrahls auf der lichtsensitiven Fläche registrierbar ist.

2. Datensammelsystem (17, 20) nach Anspruch 1, bei dem das Transportmittel (1, 18) zum Herstellen einer drahtlosen Datenübertragungsverbindung (21) und/oder einer kabelgebundenen Datenübertragungsverbindung mit dem Datensammler (13, 19) eingerichtet ist.

3. Datensammelsystem (17, 20) nach Anspruch 2, bei dem das Transportmittel (1, 18) wenigstens eine Kabelrolle (7) zum Aufrollen eines Kabels (12) der kabelgebundenen Datenübertragungsverbindung aufweist.

4. Datensammelsystem (17, 20) nach einem der vorhergehenden Ansprüche, bei dem das Transportmittel (1, 18) autonom beweglich oder fernsteuerbar ist und zum fliegenden und/oder fahrenden und/oder schwimmenden Fortbewegen ausgebildet ist.

5. Datensammelsystem (17, 20) nach einem der vorhergehenden Ansprüche, bei dem das Transportmittel (1, 18) wenigstens eine Aufnahmeeinrichtung (4) zum Aufnehmen wenigstens eines Datensammlers (13, 19) während des Transports und/oder wenigstens eine Kamera (6) und/oder wenigstens eine Steuereinheit (9, 10) und/oder wenigstens einen Datenspeicher und/oder wenigstens eine Kommunikationsschnittstelle (3) und/oder wenigstens eine Einrichtung zur Nahfeldkommunikation und/oder wenigstens ein Sender-Empfänger-System zum automatischen und berührungslosen Identifizieren und Lokalisieren von Objekten mit Radiowellen aufweist und/oder bei dem das Transportmittel (1, 18) zur optischen Bilderkennung eingerichtet ist.

6. Datensammelverfahren, bei dem
wenigstens ein mit Mitteln zum automatischen Durchführen von Messungen und Sammeln von als Daten erfassten Messwerten an einer Datensammelposition ausgebildeter Datensammler (13, 19) mit wenigstens einem mobilen Transportmittel (1, 18) zu wenigstens einer Datensammelposition (15) transportiert und von einer Absetzvorrichtung (5) des Transportmittels (1, 18) an dieser abgesetzt wird,
der an der Datensammelposition (15) angeordnete Datensammler (13, 19) Daten sammelt,
die gesammelten Daten von dem Datensammler (13, 19) an das Transportmittel (1, 18) übertragen werden und
die Absetzvorrichtung (5) den Datensammler (13, 19) nach Abschluss des Sammelns von Daten wieder aufnimmt,
**dadurch gekennzeichnet, dass**
der Datensammler (13, 19) als Datensammler (13, 19) eines Datensammelsystems (17, 20) in einem optoelektronischen Ausrichtsystem zum fluchtenden Ausrichten von Drehachsen zweier drehbar gelagerter Körper ausgebildet wird und im optoelektronischen Ausrichtsystem mit einem Datenerfassungsmittel , wie zum Beispiel einem Sensor ausgerüstet wird, das als Lichterfassungsvorrichtung ausgebildet wird, die eine lichtsensitive Fläche aufweist,
neben dem Datensammler (13, 19) wenigstens eine Lichtemissionsvorrichtung des Ausrichtsystems vom Transportmittel (1, 18) transportiert und an einer jeweiligen vorgegebenen Position abgesetzt wird,
von der Lichtemissionsvorrichtung des Ausrichtsystems ein Lichtstrahl emittiert wird und
eine Auftreffposition des von der Lichtemissionsvorrichtung emittierten Lichtstrahls auf der lichtsensitiven Fläche registriert wird.

7. Datensammelverfahren nach Anspruch 6, bei dem im Anschluss an das Übertragen der Daten der Datensammler (13, 19) von dem Transportmittel (1, 18) zu einer weiteren Datensammelposition transportiert und an dieser abgesetzt wird.

8. Datensammelverfahren nach einem der Ansprüche 6 oder 7, bei dem Datensammelpositionen (15) mittels einer Nahfeldkommunikation oder mittels eines Sender-Empfänger-Systems zum automatischen und berührungslosen Identifizieren und Lokalisieren von Objekten mit Radiowellen oder mittels einer optischen Bilderkennung vom Transportmittel (1, 18) identifiziert werden.

## Claims

1. Data collection system (17, 20) in an optoelectronic alignment system for the flush alignment of axes of rotation of two rotatably mounted bodies, comprising at least one mobile transportation means (1, 18) for transporting at least one data collector (13, 19) to at least one data collection position (15) and at least one data collector (13, 19) with means for automatically performing measurements and collecting measurement values, acquired as data, at the data collection position, wherein the transportation means (1, 18) has
at least one receiver device (10) for receiving data that the data collector (13, 19) transfers to the transportation means (1, 18), and
at least one setting-down device (5) for setting down the data collector (13, 19) at the data collection position (15) and for picking up the data collector (13, 19) again after the collection of data has been completed,
**characterized in that**
the transportation means (1, 18) is further configured to transport, in addition to the data collector (13, 19), at least one light-emission device of the alignment system for emitting a light beam and to set down said light-emission device at a respective predetermined position, and
the data collector (13, 19) in the optoelectronic alignment system is equipped with a data acquisition means, for example a sensor, which is designed as a light-detection device which has a light-sensitive area, wherein a point of incidence on the light-sensitive area of a light beam emitted by the light-emission device is registrable.

2. Data collection system (17, 20) according to Claim 1, wherein the transportation means (1, 18) is configured to establish a wireless data transfer connection (21) and/or a wired data transfer connection with the data collector (13, 19).

3. Data collection system (17, 20) according to Claim 2, wherein the transportation means (1, 18) comprises at least one cable reel (7) for winding a cable (12) of the wired data transfer connection.

4. Data collection system (17, 20) according to any one of the preceding claims, wherein the transportation means (1, 18) is autonomously movable or remote controllable and is designed for flying and/or driving and/or swimming movement.

5. Data collection system (17, 20) according to any one of the preceding claims, wherein the transportation means (1, 18) comprises at least one receptacle device (4) for receiving at least one data collector (13, 19) during transportation and/or at least one camera (6) and/or at least one control unit (9, 10) and/or at least one data memory and/or at least one communications interface (3) and/or at least one apparatus for near field communication and/or at least one transmitter-receiver system for automatic and contactless identification and localization of objects using radio waves, and/or wherein the transportation means (1, 18) is configured for optical image recognition.

6. Data collection method, wherein
at least one data collector (13, 19) designed with means for automatically performing measurements and collecting measurement values, acquired as data, at a data collection position is transported to at least one data collection position (15) using at least one mobile transportation means (1, 18) and is set down at said data collection position by a set-down device (5) of the transportation means (1, 18),
the data collector (13, 19) arranged at the data collection position (15) collects data,
the collected data are transferred from the data collector (13, 19) to the transportation means (1, 18), and
the set-down device (5) picks up the data collector (13, 19) again after the collection of data has been completed,
**characterized in that**
the data collector (13, 19) is designed as a data collector (13, 19) of a data collection system (17, 20) in an optoelectronic alignment system for the flush alignment of the axes of rotation of two rotatably mounted bodies and, in the optoelectronic alignment system, is equipped with a data acquisition means, for example a sensor, which is designed as a light-detection device which has light-sensitive area,
at least one light-emission device of the alignment system is transported by the transportation means (1, 18) in addition to the data collector (13, 19) and is set down at a respective specified position,
a light beam is emitted by the light-emission device of the alignment system, and
a point of incidence on the light-sensitive area of the light beam emitted by the light-emission device is registered.

7. Data collection method according to Claim 6, wherein following the transfer of the data, the data collector (13, 19) is transported to a further data collection position by the transportation means (1, 18) and is set down at said data collection position.

8. Data collection method according to either of Claims 6 and 7, wherein data collection positions (15) are identified by the transportation means (1, 18) by means of near field communication or by means of a transmitter-receiver system for automatic and contactless identification and localization of objects using radio waves or by means of an optical image recognition.

## Revendications

1. Système de collecte de données (17, 20) dans un système d'alignement optoélectronique servant à aligner précisément des axes de rotation de deux corps montés rotatifs, comprenant au moins un moyen de transport mobile (1, 18) servant à transporter au moins un collecteur de données (13, 19) vers au moins une position de collecte de données (15) et au moins un collecteur de données (13, 19) pourvu de moyens servant à exécuter automatiquement des mesures et à collecter des valeurs mesurées acquises sous forme de données vers la position de collecte de données, le moyen de transport (1, 18) présentant
au moins un dispositif de réception (10) servant à recevoir des données que le collecteur de données (13, 19) transmet au moyen de transport (1, 18), et
au moins un dispositif de dépose (5) servant à déposer le collecteur de données (13, 19) à la position de collecte de données (15) et à reprendre le collecteur de données (13, 19) à l'issue de la collecte de données,
**caractérisé en ce que**
le moyen de transport (1, 18) est en outre aménagé pour transporter en plus du collecteur de données (13, 19) au moins un dispositif d'émission de lumière du système d'alignement servant à émettre un faisceau lumineux et pour le déposer à une position prédéfinie respective, et
le collecteur de données (13, 19) dans le système d'alignement optoélectronique est équipé d'un moyen d'acquisition de données, comme par exemple un capteur, qui est réalisé sous la forme d'un dispositif d'acquisition de lumière qui présente une surface photosensible, une position d'incidence d'un faisceau lumineux émis par le dispositif d'émission de lumière sur la surface photosensible pouvant être enregistrée.

2. Système de collecte de données (17, 20) selon la revendication 1, dans lequel le moyen de transport (1, 18) est aménagé pour établir une liaison de transmission de données sans fil (21) et/ou une liaison de transmission de données filaire avec le collecteur de données (13, 19).

3. Système de collecte de données (17, 20) selon la revendication 2, dans lequel le moyen de transport (1, 18) présente au moins un rouleau de câble (7) servant à enrouler un câble (12) de la liaison de transmission de données filaire.

4. Système de collecte de données (17, 20) selon l'une quelconque des revendications précédentes, dans lequel le moyen de transport (1, 18) est mobile de manière autonome ou peut être télécommandé et est réalisé pour des déplacements en volant et/ou en roulant et/ou en flottant.

5. Système de collecte de données (17, 20) selon l'une quelconque des revendications précédentes, dans lequel le moyen de transport (1, 18) présente au moins un dispositif de logement (4) servant à loger au moins un collecteur de données (13, 19) pendant le transport et/ou au moins une caméra (6) et/ou au moins une unité de commande (9, 10) et/ou au moins une mémoire de données et/ou au moins une interface de communication (3) et/ou au moins un équipement de communication en champ proche et/ou au moins un système d'émission-réception servant à identifier et à localiser de manière automatique et sans contact des objets par ondes radio, et/ou dans lequel le moyen de transport (1, 18) est réalisé pour une reconnaissance optique d'images.

6. Procédé de collecte de données, dans lequel
au moins un collecteur de données (13, 19), réalisé avec des moyens servant à exécuter automatiquement des mesures et à collecter des valeurs mesurées acquises sous forme de données à une position de collecte de données, est transporté par au moins un moyen de transport mobile (1, 18) vers au moins une position de collecte de données (15) et y est déposé par un dispositif de dépose (5) du moyen de transport (1, 18),
le collecteur de données (13, 19) disposé à la position de collecte de données (15) collecte des données,
les données collectées par le collecteur de données (13, 19) sont transmises au moyen de transport (1, 18), et
le dispositif de dépose (5) reprend le collecteur de données (13, 19) à l'issue de la collecte de données,
**caractérisé en ce que**
le collecteur de données (13, 19) est réalisé sous la forme d'un collecteur de données (13, 19) d'un système de collecte de données (17, 20) dans un système d'alignement optoélectronique servant à aligner précisément des axes de rotation de deux corps montés rotatifs, et est équipé dans le système d'alignement optoélectronique d'un moyen d'acquisition de données, comme par exemple un capteur, qui est réalisé sous la forme d'un dispositif d'acquisition de lumière qui présente une surface photosensible,
en plus du collecteur de données (13, 19), au moins un dispositif d'émission de lumière du système d'alignement est transporté et déposé à une position prédéfinie respective par le moyen de transport (1, 18),
le dispositif d'émission de lumière du système d'alignement émet un faisceau lumineux, et
une position d'incidence du faisceau lumineux émis par le dispositif d'émission de lumière sur la surface photosensible est enregistrée.

7. Procédé de collecte de données selon la revendication 6, dans lequel, après la transmission des données, le collecteur de données (13, 19) est transporté par le moyen de transport (1, 18) vers une autre position de collecte de données et y est déposé.

8. Procédé de collecte de données selon l'une quelconque des revendications 6 ou 7, dans lequel les positions de collecte de données (15) sont identifiées par le moyen de transport (1, 18) au moyen d'une communication en champ proche ou au moyen d'un système d'émission-réception servant à identifier et à localiser de manière automatique et sans contact des objets par ondes radio ou au moyen d'une reconnaissance optique d'images.
